## Europäisches Patentamt

## European Patent Office

## Office européen des brevets

(19)

(11) Veröffentlichungsnummer: **0 013 898**
**A1**

(12) ## EUROPÄISCHE PATENTANMELDUNG

(21) Anmeldenummer: 80100084.5

(22) Anmeldetag: 09.01.80

(51) Int. Cl.³: **F 16 K 37/00**

(30) Priorität: 13.01.79 DE 2901275

(43) Veröffentlichungstag der Anmeldung: 06.08.80
Patentblatt 80/16

(84) Benannte Vertragsstaaten: **AT BE DE FR IT LU NL**

(71) Anmelder: **Hans Sasserath & Co. KG.,
Mühlenstrasse 100, D-4052 Korschenbroich (DE)**

(72) Erfinder: **Hecking, Willi, Andreasstrasse 21,
D-4050 Mönchengladbach 2 (DE)**

(74) Vertreter: **Weisse, Jürgen, Dipl.-Phys. et al,
Bökenbusch 41 Postfach 11 03 86,
D-5620 Velbert 11-Langenberg (DE)**

(54) **Regelventil.**

(57) Bei einem Regelventil mit einem nach Maßgabe einer Regelgröße gesteuerten Ventilschließglied (32) soll die Bewegung dieses Ventilschließgliedes (32) von außen überwacht werden, um festzustellen, ob das Ventil geöffnet ist oder nicht. Zu diesem Zwecke ist im Inneren des Ventilgehäuses (30) ein mit dem Ventilschließglied (32) gekoppeltes Anzeigeglied (50) angeordnet. Dieses Anzeigeglied (50) ist durch einen durchsichtigen Teil (48) des Ventilgehäuses (30) hindurch sichtbar und zeigt den Öffnungszustand des Ventils an. Das Anzeigeglied (50) gestattet eine bequeme Einstellung des Regelventils.

EP 0 013 898 A1

0013898

Regelventil

Die Erfindung betrifft ein Regelventil, insbesondere Differenzdruckregler zur Begrenzung des Differenzdrucks zwischen Vorlauf und Rücklauf einer mit Thermostatventilen an den Radiatoren versehenen Heizungsanlage durch Freigabe einer Kurzschlußverbindung zwischen Vorlauf und Rücklauf, mit einem Ventilgehäuse, das einen Einlaß- und einen Auslaßstutzen aufweist und das durch eine einen Ventilsitz und einen Ventildurchgang bildende Trennwand in eine mit dem Einlaßstutzen verbundene, einlaßseitige Kammer und eine mit dem Auslaßstutzen verbundene auslaßseitige Kammer unterteilt ist, ferner mit einem nach Maßgabe einer Regelgröße gesteuerten Ventilschließglied, das mit dem Ventilsitz zusammenwirkt, und Anzeigemitteln zur Anzeige der Stellung des Ventilschließglieds.

Bei Warmwasser-Heizungsanlagen wird das Heizwasser durch eine Umwälzpumpe vom Kessel über einen Vorlauf zu den Radiatoren gepumpt und fließt über einen Rücklauf zum Kessel zurück. An den einzelnen Radiatoren sind Thermostatventile angeordnet, welche den Wasserdurchlauf durch den betreffenden Radiator drosseln, wenn eine bestimmte, eingestellte Raumtemperatur erreicht wird. Bei hohen Außentemperaturen und entsprechend geringem Wärmebedarf kann es dann geschehen, daß die Thermostatventile alle den Wasserdurchfluß durch die Radiatoren stark drosseln.

Das würde zu einer Erhöhung der Druckdifferenz zwischen Vorlauf und Rücklauf führen, welche die Fördermenge der Pumpe nun durch die stark gedrosselten Thermostatventile zu drücken sucht. Das ist aber nicht der Zweck der Thermostatventile. Es ist daher ein Differenzdruckregler vorgesehen, der auf die Druckdifferenz zwischen Vorlauf und Rücklauf anspricht und dann, wenn die Thermostatventile den Umlauf durch die Heizungsanlage drosseln, eine Kurzschlußverbindung zwischen Vorlauf und Rücklauf freigibt.

Es bietet in der Praxis Schwierigkeiten, den Ansprechdruck des Differenzdruckreglers, d.h. den Druck, bei welchem die Kurzschlußverbindung geöffnet wird, richtig festzulegen. In den seltensten Fällen ist der genaue Differenzdruck bekannt, bei welchem die Kurzschlußverbindung geöffnet werden sollte. Theoretische Berechnungen stimmen mit den praktisch vorliegenden Verhältnissen nur selten überein. In der Praxis nimmt der Installateur die Einstellung oft so vor, daß bei geschlossenen Thermostatventilen die Einstellung des Differenzdruckreglers im Sinne einer Verminderung des Ansprechdrucks solange verändert wird, bis ein Temperaturanstieg im Rücklauf fühlbar ist. Dieser Temperaturanstieg am Rücklauf erfolgt sehr langsam. Er ist auch nur bei völlig unbelasteter Heizungsanlage festzustellen. Dieses bekannte Verfahren ist daher sehr zeitraubend und aufwendig.

Es sind Regelventile bekannt, bei denen von außen feststellbar ist, ob das Ventil geöffnet oder geschlossen ist. Das ist jedoch nur bei solchen Regelventilen möglich, bei denen die Hubbewegung auf ein Stellglied außerhalb des Wasserraumes übertragen wird. Dabei tritt eine verhältnismäßig starke Stopfbuchsenreibung auf, die wiederum entsprechend große Stellkräfte erforderlich macht. Dies bedingt große Steuerflächen, die zu einer Verteuerung der Armatur führen.

Der Erfindung liegt die Aufgabe zugrunde, ein Regelventil der eingangs definierten Art zu schaffen, welches eine Überwachung der Bewegung des Ventilschließgliedes gestattet, ohne daß dazu die Konstruktion des Regelventils wesentlich geändert zu werden braucht.

Erfindungsgemäß wird diese Aufgabe dadurch gelöst, daß die Anzeigemittel ein im Inneren des Ventilgehäuses angeordnetes, mit dem Ventilschließglied gekoppeltes Anzeigeglied aufweisen, das hinter einem durchsichtigen Teil des Ventilgehäuses angeordnet ist.

Durch die Anordnung der Anzeigemittel im Inneren des Ventilgehäuses wird die Stopfbuchsenreibung für die Durchführung der Stellbewegung vermieden. Die Verstellung der Anzeigemittel kann daher durch das Hubglied eines im wesentlichen konventionell aufgebauten Regelventils erfolgen.

Weitere Ausgestaltungen der Erfindung sind Gegenstand der Unteransprüche.

Die Erfindung ist nachstehend an einem Ausführungsbeispiel unter Bezugnahme auf die zugehörige Zeichnung näher erläutert, die einen Vertikalschnitt durch einen nach der Erfindung ausgebildeten Differenzdruckregler zeigt.

Der Differenzdruckregler enthält einen Gehäuseunterteil 10, der einen Einlaßstutzen 12 und einen Auslaßstutzen 14 aufweist. Eine Trennwand 16 unterteilt den Gehäuseinnenraum in eine mit dem Einlaßstutzen 12 verbundene, einlaßseitige Kammer 18 und eine mit dem Auslaßstutzen 14 verbundene auslaßseitige Kammer 20. Die Trennwand 16 bildet einen Ventilsitz 22 mit einem Ventildurchgang 24. Der Gehäuseunterteil 10 ist in Verlängerung des Ventilsitzes 22 offen und bildet gleichachsig zu dem Ventilsitz 22 eine Membranauflage 26, die von einem Rand 28 zur Aufnahme eines Ge-

4

häuseoberteils 30 umgeben ist. Auf der Membranauflage 26 liegt eine zu gleich als Ventilschließglied dienende Membran 32 auf. Der Gehäuseoberteil 30 ist umgekehrt-topfförmig ausgebildet und greift mit seinem Rand 34 in den Rand 28 des Gehäuseunterteils 10 unter Zwischenlage von Dichtgliedern 36 ein. Die Membran 32 ist dabei zwischen Gehäuseunterteil 10 und Gehäuseoberteil 30 eingespannt.

Mit der Membran 32 ist ein Federteller 38 verbunden. An dem Federteller 38 liegt eine Belastungsfeder 40 an. Die Belastungsfeder 40 stützt sich an einem Federwiderlager 42 ab, welches in dem Gehäuseoberteil 30 sitzt. Eine Einstellspindel 44, welche gleichachsig zu dem Gehäuseoberteil 30 angeordnet und abdichtend aus dessen Stirnseite herausgeführt ist, gestattet eine axiale Verstellung des Federwiderlagers 42.

Über einen Verbindungskanal 46 ist eine druckübertragende Verbindung zwischen dem Inneren des Gehäuseoberteils 30 und der im Gehäuseunterteil 10 gebildeten auslaßseitigen Kammer 20 hergestellt. Das ist der Grundaufbau eines Differenzdruckreglers. Die Membran 32 ist auf der Ringfläche zwischen der Membranauflage 26 und dem Ventilsitz 22 von unten her vom Einlaßdruck, also in der praktischen Anwendung vom Druck im Vorlauf der Heizungsanlage beaufschlagt, während auf der Oberseite auf diese Ringfläche der Auslaßdruck über die Verbindung 46, also der Druck im Rücklauf der Heizungsanlage wirkt. Der Druckdifferenz wirkt die Spannung der Feder 40 entgegen, die durch Verstellen des Federwiderlagers 42 mittels der Einstellspindel 44 einstellbar ist. Bei Überschreiten eines vor-gegebenen Ansprechdrucks hebt die Membran 32, die zugleich das Ventilschließglied bildet, vom Ventilsitz 22 ab und gibt eine Kurzschlußverbindung zwischen Vorlauf und Rücklauf soweit frei, daß die eingestellte Druckdifferenz nicht überschritten wird. Auf den zentralen Bereich der Membran 32 innerhalb des Ventilsitzes 22 wirkt auf beiden Seiten der gleiche Druck, nämlich der Auslaßdruck Die Einstellspindel 44 trägt an ihrem aus dem Gehäuseoberteil 30 herausragenden Ende eine Kappe 48 aus durchsichtigem Material. Das Anzeigeglied ist ein Stab 50, der an dem Federteller 38 anliegt, in der Einstellspindel 44 geführt ist und mit seinem Ende 52 in die Kappe 48 hineinragt. Die Einstellspindel 44 weist dabei eine sich von der membranseitigen Stirnseite her erstreckende Sacklochbohrung 54 auf, in welcher der Stab 50 mittels radialer Leisten 56 geführt ist. Zwischen den radialen Leisten 56 und dem Grund der Sacklochbohrung 54 ist eine im Vergleich zur Belastungsfeder 40 der Membran 32 weiche Druckfeder 58 angeordnet, welche den Stab 50 in Anlage an dem Federteller 38 hält, ohne einen wesentlichen Einfluß auf den Ansprechdruck des Differenzdruckreglers zu nehmen. Die Halterung der durchsichtigen Kappe an der Einstellspindel 44 geschieht in der Weise, daß die Einstellspindel 44 an ihrem aus dem Gehäuseoberteil 30 herausragenden Ende 60 eine gegenüber einer axialen Führungsbohrung 62 für den Stab 50 erweiterte Axialbohrung 64 mit Innengewinde aufweist und daß die mit Außengewinde versehene Kappe 48 in diese Axialbohrung 64 eingeschraubt ist. Auf ihrer innerhalb der Axialbohrung 64 liegenden Mantelfläche weist die Kappe eine Ringnut auf, die einen O-Ring 66 zur Abdichtung zwischen Kappe 48 und Einstellspindel 44 enthält.

Die durch eine Bohrung 68 des Gehäuseoberteils 30 geführte Einstellspindel 44 weist eine Schulter 70 auf, welche an der Innenseite an dem Gehäuseoberteil 44 anliegt. Weiterhin ist die Einstellspindel 44 durch einen auf der Außenseite des Gehäuseoberteils 30 aufliegenden, in eine Umfangsnut der Einstellspindel 44 eingreifenden Sprengring 72 axial gesichert. Zwischen Schulter 70 und Sprengring 72 weist die Einstellspindel eine weitere Umfangsnut auf, welche einen O-Ring 74 zur Abdichtung zwischen Einstellspindel 44 und Gehäuseoberteil 30 enthält. An ihrem aus dem Gehäuseoberteil herausragenden Ende 60 weist die Einstellspindel 44 ein Außengewinde auf, auf welches eine durch eine Kontermutter 76 gesicherte Mutter 78 zur Festlegung der Winkellage der Einstellspindel aufgeschraubt ist. Zwischen dieser Mutter 78, der Einstellspindel 44 und der Stirnfläche des Gehäuseoberteils 30 ist ein Dichtring 80 angeordnet.

Das Federwiderlager 42 ist eine Ringscheibe, die mit einem Außengewinde in einem Innengewinde 82 des Gehäuseoberteils 30 geführt ist. Das Federwiderlager 42 ist auf der Einstellspindel 44 in einer eine Relativverdrehung ausschließenden Weise geführt. Durch Verdrehung der Einstellspindel kann somit das Federwiderlager 42 verdreht und damit mehr oder weniger tief in den Gehäuseoberteil 30 eingeschraubt werden. Die Membran 32 ist ringförmig und mit ihrem inneren Rand in einen zentralen Kanalkörper 84 eingespannt, welcher den Verbindungskanal 46 enthält. Der Kanalkörper 84 weist einen rohrförmigen Ansatz 86 auf, welcher den Federteller 38 trägt. Außerdem ist an dem Kanalkörper 84 ein Membranteller 88 durch Umbördeln befestigt. Die Membran 32 ist dabei zwischen einem Flansch 90 des Kanalkörpers 84 und dem Membranteller 88 festgeklemmt.

<u>Patentansprüche</u>

1. Regelventil, insbesondere Differenzdruckregler zur
Begrenzung des Differenzdrucks zwischen Vorlauf und
Rücklauf einer mit Thermostatventilen an den Radiatoren versehenen Heizungsanlage durch Freigabe
einer Kurzschlußverbindung zwischen Vorlauf und Rücklauf, mit einem Ventilgehäuse, das einen Einlaß- und
einen Auslaßstutzen aufweist und das durch eine einen
Ventilsitz und einen Ventildurchgang bildende Trennwand in eine mit dem Einlaßstutzen verbundene, einlaßseitige Kammer und eine mit dem Auslaßstutzen verbundene auslaßseitige Kammer unterteilt ist, ferner
mit einem nach Maßgabe einer Regelgröße gesteuerten
Ventilschließglied, das mit dem Ventilsitz zusammenwirkt, und Anzeigemitteln zur Anzeige der Stellung
des Ventilschließglieds, dadurch gekennzeichnet,
daß die Anzeigemittel ein im Inneren des Ventilgehäuses (1o,30) angeordnetes, mit dem Ventilschließglied
gekoppeltes Anzeigeglied (50) aufweisen, das hinter
einem durchsichtigen Teil (48) des Ventilgehäuses
(10,30) angeordnet ist.

2. Regelventil nach Anspruch 1, enthaltend:

einen Gehäuseunterteil (10), der den Einlaßstutzen
(12) und den Auslaßstutzen (14) sowie die Trennwand
(16) mit dem Ventilsitz (22) aufweist, in Verlängerung des Ventilsitzes (22) offen ist und gleichachsig zu dem Ventilsitz (22) eine Membranauflage (26)
bildet, die von einem Rand (28) zur Aufnahme eines
Gehäuseoberteils (30) konzentrisch umgeben ist,

eine zugleich als Ventilschließglied dienende Membran (32), die auf der Membranauflage aufliegt,

einen umgekehrt-topfförmigen Gehäuseoberteil (30), der mit seinem Rand (34) in den Rand (28) des Gehäuseunterteils (10) unter Zwischenlage von Dichtgliedern (36) eingreift, wobei die Membran (32) zwischen Gehäuseunterteil (1o) und Gehäuseoberteil (30) eingespannt ist,

einen mit der Membran(32) verbundenen Federteller (38),

eine Belastungsfeder (40), die an dem Federteller (38) anliegt,

ein Federwiderlager (42), welches in dem Gehäuseoberteil (30) sitzt und an welchem sich die Belastungsfeder (40) abstützt,

eine Einstellspindel (44), welche gleichachsig zu dem Gehäuseoberteil (30) angeordnet und abdichtend aus dessen Stirnseite herausgeführt ist und durch welche das Federwiderlager (42) axial verstellbar ist, und

einen Verbindungskanal (46), über welchen eine druckübertragende Verbindung zwischen dem Inneren des Gehäuseoberteils (30) und der im Gehäuseunterteil (1o) gebildeten auslaßseitigen Kammer (20) hergestellt ist,

dadurch gekennzeichnet,

daß die Einstellspindel (44) an ihrem aus dem Gehäuseoberteil herausragenden Ende eine Kappe (48) aus durchsichtigem Material trägt und

0013898

daß das Anzeigeglied (50) ein Stab ist, der an dem Federteller (38) anliegt, in der Einstellspindel (44) geführt ist und mit seinem Ende in die Kappe (48) hineinragt.

3. Regelventil nach Anspruch 2, dadurch gekennzeichnet,

daß die Einstellspindel (44) eine sich von der membranseitigen Stirnseite her erstreckende Sacklochbohrung (54) aufweist, in welcher der Stab (50) mittels radialer Leisten (56) geführt ist und

daß eine im Vergleich zur Belastungsfeder (40) der Membran (32) weiche Druckfeder (58) zwischen den radialen Leisten (56) und dem Grund der Sacklochbohrung (54) angeordnet ist und den Stab (50) in Anlage an dem Federteller (38) hält.

4. Regelventil nach Anspruch 3, dadurch gekennzeichnet,

daß die Einstellspindel (44) an ihrem aus dem Gehäuseoberteil (30) herausragenden Ende eine gegenüber einer axialen Führungsbohrung (62) für den Stab (50) erweiterte Axialbohrung (64) mit Innengewinde aufweist und daß die mit Außengewinde versehen Kappe (48) in diese Axialbohrung (64) eingeschraubt ist.

5. Regelventil nach Anspruch 4, dadurch gekennzeichnet, daß die Kappe auf ihrer innerhalb der Axialbohrung (64) liegenden Mantelfläche eine Ringnut aufweist, die einen O-Ring (66) zur Abdichtung zwischen Kappe (48) und Einstellspindel (44) enthält.

16. Regelventil nach Anspruch 5, dadurch gekennzeichnet,

daß die durch eine Bohrung (68) des Gehäuseoberteils (44) geführte Einstellspindel (44) eine Schulter (70) aufweist, welche auf der Innenseite an dem Gehäuseoberteil (30) anliegt, und durch einen auf der Außenseite des Gehäuseoberteils (30) aufliegenden, in eine Umfangsnut der Einstellspindel (44) eingreifenden Sprengring (72) axial gesichert ist.

daß die Einstellspindel (44) zwischen Schulter (70) und Sprengring (72) eine weitere Umfangsnut aufweist, welche einen O-Ring (74) zur Abdichtung zwischen Einstellspindel (44) und Gehäuseoberteil (30) enthält,

daß die Einstellspindel (44) an ihrem aus dem Gehäuseoberteil (30) herausragenden Ende (60) ein Außengewinde aufweist, auf welches eine durch eine Kontermutter (76) gesicherte Mutter (78) zur Festlegung der Winkellage der Einstellspindel (44) aufgeschraubt ist, und

daß zwischen dieser Mutter (78), der Einstellspindel (44) und der Stirnfläche des Gehäuseoberteils (30) ein Dichtring (80) angeordnet ist.

Europäisches Patentamt

**EUROPÄISCHER RECHERCHENBERICHT**

0013898

Nummer der Anmeldung

EP 80 10 0084

| Kategorie | Kennzeichnung des Dokuments mit Angabe, soweit erforderlich, der maßgeblichen Teile | betrifft Anspruch |
|---|---|---|
| | US - A - 3 802 462 (TRÖSCH)<br>* Spalte 2, Zeilen 22 bis 30; Fig. 1 bis 4 * | 1-6 |
| | -- | |
| | DE - U - 1 733 558 (MOSEBACH)<br>* Fig. 1 * | 1-4 |
| | -- | |
| | DE - C - 64 617 (SCHWADE)<br>* Fig. 1 * | 1,2 |
| | -- | |
| | US - A - 4 122 863 (BRAUKMANN)<br>* Spalte 1, Zeilen 10 bis 12; Spalte 3, Zeilen 27 bis 41 * | 1 |
| | -- | |
| | US - A - 4 072 126 (KEMP)<br>* Fig. 6, 7 * | 2 |
| | -- | |
| A | DE - U - 6 805 809 (DILLINGER STAHLBAU)<br>* ganze Schrift * | |
| | -- | |
| A | US - A - 2 973 774 (CLURE)<br>* ganze Schrift * | |
| | -- | |
| A | US - A - 2 934 036 (ANDERSON et al.)<br>* ganze Schrift * | |
| | ---- | |

**EINSCHLÄGIGE DOKUMENTE**

KLASSIFIKATION DER ANMELDUNG (Int.Cl.)

F 16 K 37/00

RECHERCHIERTE SACHGEBIETE (Int. Cl.)

F 16 K 37/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X  Der vorliegende Recherchenbericht wurde für alle Patentansprüche erstellt.

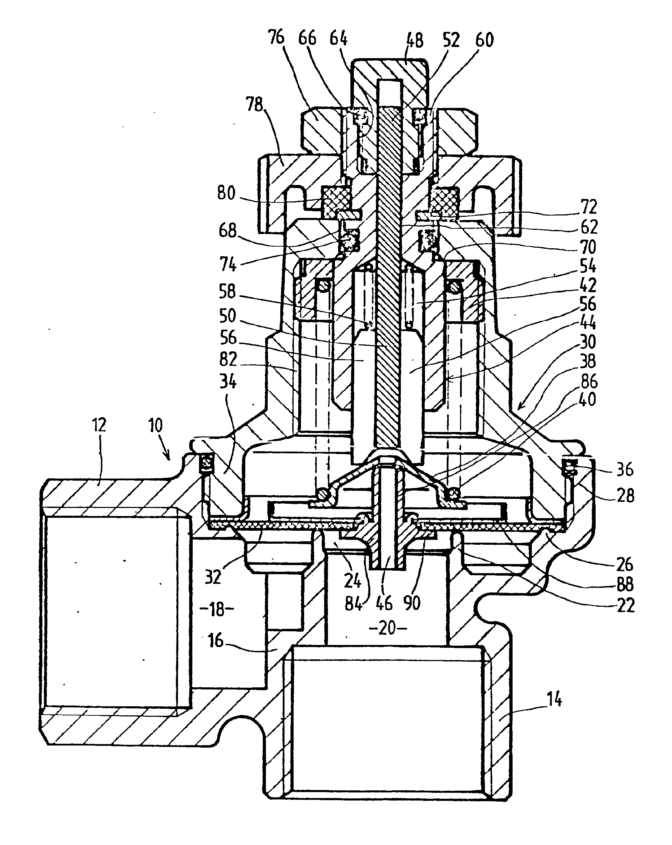

| Recherchenort | Abschlußdatum der Recherche | Prüfer |
|---|---|---|
| Berlin | 21-03-1980 | SCHLABBACH |

EPA form 1503.1   06.78